# EUROPÄISCHE PATENTANMELDUNG

(11) **EP 2 977 939 A1**
(43) Veröffentlichungstag der Anmeldung: **27.01.2016**
(21) Anmeldenummer: 14178252.4
(22) Anmeldetag: 24.07.2014
(51) Int. Cl.: G06Q 10/06, G06Q 10/10

(54) **Verfahren zur Aufgaben-Verteilung, Vorrichtung zur Durchführung des Verfahrens und Computerprogramm**

(71) Anmelder: Alyushev, Farid, 22060 Campione (IT)
(72) Erfinder: Alyushev, Farid, 22060 Campione (IT)
(74) Vertreter: Jeck, Anton

(57) **Zusammenfassung**

Die erfindungsgemäße Vorgehensweise zur Aufgaben-Verteilung geht davon aus, dass wenigstens eine Aufgaben-Nachricht von einem Aufgaben-Sender über ein mobiles Endgerät zu einem Aufgaben-Empfänger übermittelt wird und dass der Aufgaben-Sender den Aufgaben-Empfänger aus einer im mobilen Endgerät hinterlegten Liste auswählt, wobei die Aufgaben Aktivitäten, Ereignisse, Arbeitszeiten, Termine, Erholung, Freizeit, Familie, Ausbildung und dergleichen betreffen die erfindungsgemäße Vorgehensweise zeichnet sich dadurch aus, dass genau ein Aufgaben-Empfänger aus der Liste ausgewählt wird, dass für den einen ausgewählten Nachrichten-Empfänger eine oder mehrere Aufgaben erstellt werden, dass die Erstellung der Aufgabe nur als Text ohne Dateianhänge erfolgt, dass ein Instant-Messenger-Programm im mobilen Endgerät gestartet wird, dass die Aufgaben-Nachricht an den einen Nachrichten-Empfänger über eine Mobilfunk-Verbindung mittels des Instant-Messenger-Programms gesandt wird, dass nur der Aufgaben-Sender von seinem mobilen Endgerät eine Aufgabe an den Aufgaben-Empfänger senden kann und dass der Aufgaben-Empfänger keine mit dieser Aufgaben-Nachricht in Verbindung stehende weitere Aufgabe an den Nachrichten-Sender zurücksenden kann und dass vom Aufgaben-Empfänger eine Zustimmungs-Nachricht und/oder eine Erledigungs-Nachricht zur wenigstens einen gestellten Aufgabe vom Aufgaben-Empfänger über die Mobilfunk-Verbindung mittels des Instant-Messenger-Programms zurück an den Aufgaben-Sender gesendet wird.

## Beschreibung

Die Erfindung betrifft ein Verfahren zur Aufgaben-Verteilung, bei welchem wenigstens eine Aufgaben-Nachricht von einem Aufgaben-Sender über ein mobiles Endgerät zu einem Aufgaben-Empfänger übermittelt wird und bei welchem der Aufgaben-Sender den Aufgaben-Empfänger aus einer im mobilen Endgerät hinterlegten Liste auswählt, wobei die Aufgaben Aktivitäten, Ereignisse, Arbeitszeiten, Termine, Erholung, Freizeit, Familie, Ausbildung und dergleichen betreffen, nach dem Oberbegriff des Anspruchs 1.

Die Erfindung betrifft weiterhin eine Vorrichtung zur Durchführung des Verfahrens.

Weiterhin betrifft die Erfindung ein Computerprogramm, das in einem Speicher der Vorrichtung zur Durchführung des Verfahrens hinterlegt ist.

Bekannt ist ein Programm mit der Bezeichnung "Clear" (Hersteller: Apple"), das für eine Zeit- und Aufgabenplanung eingesetzt ist. Mit diesem Programm lassen sich Aktivitäten und Aufgaben im alltäglichen Leben planen. Das Programm ist für die Mehrheit von Benutzern verwendbar, die keine mächtigen Bedienungselemente für die Planungen verwenden. Eine große Aufmerksamkeit ist dabei der Anzeige beigemessen. Zudem kann man die Aufgaben löschen oder die erledigten Aufgaben mit Strichen nach rechts oder links markieren.

Die Schritte des Programms werden auf einem Farb-Display wiedergegeben, so dass das Programm leicht bedient werden kann.

Der große Nachteil des Programms "Clear" ist, dass das Programm ausschließlich auf eine persönliche, häusliche Verwendung für die Führung von Listen alltäglicher Aktivitäten gerichtet ist. Es gibt keine Möglichkeit einer Synchronisation, einer Kennungshinzufügung und eines Zeit- und Datumshinweises. Der Text-Umfang der Aufgabe ist auf nur eine Zeile beschränkt. Eine Organisation der Planung von Aktivitäten und Aufgaben eines Benutzers in allen Lebensbereichen, sowohl zuhause als auch bei der Arbeit, ist nicht vorgesehen.

Ein anderes bekanntes Programm "Megaplan" kann zur Planung und Steuerung von Aktivitäten und Businessaufgaben verwendet werden, da das Programm ein ganzes System einer Businesssteuerung beinhaltet. Jeder Angestellte hat eine Personalseite mit Kontaktinformationen, der Geschichte der Arbeit und der Auslastung. Die Benutzer planen mit dem Programm die gesamte tägliche Arbeit: Markieren die Aktivitäten, lösen Aufgaben, verfolgen Projekte, lernen Kollegen kennen, unterhalten sich mit Kunden, bestimmen Termine, schließen Handelsaufträge ab, bewahren Dokumente auf, bereiten Berichte vor und halten sich auf dem Laufenden.

Die enge Ausrichtung dieser Anlage auf Geschäftsprozesse und das Fehlen einer Möglichkeit, ein einfaches Interface nach den Aufgaben auf Grund der Menge der Funktionen der Anlage zu beachten, ist ein großer Nachteil dieser Anlage. Die umfangreiche Struktur des Programms und der Umfang der zu speichernden Daten in der mobilen Einrichtung machen die Bedienung des Programms kompliziert und aufwändig.

Der Erfindung am nächsten kommt ein Taskplaner oder Organizer, wie beispielsweise in einem Smartphone enthalten ist.

Wie auch bei der Mehrheit von Organizern ist die Planung auf Listen/Blättern vorgegeben, d. h., der Benutzer führt einige Listen mit einer bestimmten Kategorie wie beispielsweise "Haus", "Arbeit", "Verschiedenes" und überträgt diese je nach Aufgabe in eine bestimmte Aufgabenliste. Jeder Aufgabe kann man einen Tag hinzufügen, wann diese Aufgabe zu erfüllen ist. Man kann eine Benachrichtigung vorgeben. Die Aufgabe kann man in Unter-Aufgaben aufteilen. Wichtige Unternehmungen kann man mit Sternchen markieren. Man kann auch die Markierung der Aufgabe nach einer bestimmten Zeit aufheben. Die Aufgaben mit hoher Priorität kann man getrennt von den übrigen Listen durchsehen.

Bekannte Taskplaner oder Organizer bieten die Möglichkeit einer Übermittlung per E-Mail.

Die bekannten Programme, mit denen Aufgaben verteilt werden können, sind entweder nur auf den jeweiligen Benutzer abgestimmt oder sind dann, wenn mehrere Benutzer eingebunden werden können, zwar sehr flexibel, aber auch sehr umfangreich und nicht einfach zu bedienen.

Es ist daher Aufgabe der Erfindung, ein Verfahren zur Aufgaben-Verteilung, eine Vorrichtung zur Durchführung des Verfahrens und ein Computerprogramm jeweils anzugeben, die eine Aufgaben-Verteilung für jeden Lebensbereich des Benutzers, z. B. Erholung, Freizeit, Familie, Ausbildung usw., die eine einfache Struktur aufweisen und die insbesondere sehr einfach bedienbar sind.

Die gestellte Aufgabe wird durch die Merkmale der nebengeordneten Ansprüche jeweils gelöst.

Die erfindungsgemäße Vorgehensweise zur Aufgaben-Verteilung, bei welcher wenigstens eine Aufgaben-Nachricht von einem Aufgaben-Sender über ein mobiles Endgerät zu einem Aufgaben-Empfänger übermittelt wird und bei welcher der Aufgaben-Sender den Aufgaben-Empfänger aus einer im mobilen Endgerät hinterlegten Liste auswählt, wobei die Aufgaben Aktivitäten, Ereignisse, Arbeitszeiten, Termine, Erholung, Freizeit, Familie, Ausbildung und dergleichen betreffen, zeichnet sich dadurch aus, dass genau ein Aufgaben-Empfänger aus der Liste ausgewählt wird, dass für den einen ausgewählten Nachrichten-Empfänger eine oder mehrere Aufgaben erstellt werden, dass die Erstellung der Aufgabe nur als Text ohne Dateianhänge erfolgt, dass ein Instant-Messenger-Programm im mobilen Endgerät gestartet wird, dass die Aufgaben-Nachricht an den einen Nachrichten-Empfänger über eine Mobilfunk-Verbindung mittels des Instant-Messenger-Programms gesandt wird, dass nur der Aufgaben-Sender von seinem mobilen Endgerät eine Aufgabe an den Aufgaben-Empfänger senden kann und dass der Aufgaben-Empfänger keine mit dieser Aufgaben-Nachricht in Verbindung stehende weitere Aufgabe an den Nachrichten-Sender zurücksenden kann und dass vom Aufgaben-Empfänger eine Zustimmungs-Nachricht beziehungsweise eine Annahme-Nachricht zu der wenigstens einen gestellten Aufgabe und/oder eine Erledigungsnachricht über die Erledigung der gestellten Aufgabe vom Aufgaben-Empfänger über die Mobilfunk-Verbindung mittels des Instant-Messenger-Programms zurück an den Aufgaben-Sender gesendet wird. Dabei kann die gestellte Aufgabe in die individuelle Tagesordnung beziehungsweise den individuellen Terminplan aufgenommen werden. Nach der Erledigung der gestellten Aufgabe wird die Erledigungsnachricht gesendet, mit nachfolgender Bestätigung und Löschung der Aufgabe aus der Liste.

Die erfindungsgemäße Vorgehensweise bietet damit ein sehr einfach strukturiertes System, welches insbesondere sehr einfach zu bedienen ist. Die erfindungsgemäße Vorgehensweise greift auf Standard-Hardware und einfach verfügbare Software auf. Die Aufgaben-Verteilung wird dadurch besonders einfach, dass zur Verteilung ein herkömmliches Instant-Messenger-Programm zur Verteilung bzw. Übermittlung an Aufgaben-Empfänger herangezogen wird, wodurch die Aufgabe vom ausgewählten Aufgaben-Empfänger unmittelbar empfangen werden kann, ohne dass kompliziertere Bedienschritte erforderlich wären. Eine Übertragung beispielsweise mittels E-Mail wäre für eine einfache Durchführung des erfindungsgemäßen Verfahrens nicht sinnvoll.

Die erfindungsgemäße Aufgaben-Verteilung wird insbesondere auch dadurch besonders einfach bedienbar, dass der Aufgaben-Empfänger selbst keine mit der gestellten Aufgabe im Zusammenhang stehende weitere Aufgabe an den Aufgaben-Sender zurücksenden kann. Ebenso ist ein gemeinsames Bearbeiten von Aufgaben, wobei die Daten beispielsweise in einer Cloud oder auf einem Server zentral gespeichert sind, explizit nicht vorgesehen.

Durch die vorgesehene Übermittlung der Aufgaben-Verteilung über ein herkömmliches Mobilfunknetz wird eine vergleichsweise preiswerte Lösung geschaffen. Hierbei kann die Aufgaben-Verteilung über eine Internet-Verbindung im Rahmen der Mobilfunk-Verbindung stattfinden.

Vorteilhafte Weiterbildungen und Ausgestaltungen der erfindungsgemäßen Vorgehensweise sind jeweils Gegenstände von abhängigen Ansprüchen.

Eine Ausgestaltung sieht vor, dass der Aufgaben-Sender über die Mobilfunk-Verbindung mittels des Instant-Messenger-Programms an den Aufgaben-Empfänger eine Bestätigungs-Nachricht über die Schließung der Aufgaben-Nachricht sendet.

Eine Ausgestaltung sieht vor, dass eine Speicherung der Aufgaben-Nachricht und des Aufgaben-Empfängers in eine Speichereinheit des mobilen Endgeräts erfolgt.

Eine andere Ausgestaltung sieht vor, dass eine Anzeige eines Kalenders auf einem Display des mobilen Endgeräts erfolgt, welche die Aufgaben-Nachricht und den Aufgaben-Empfänger wiedergibt. Hierdurch vereinfacht sich die Bedienung.

Eine Ausgestaltung sieht vor, dass eine Zuordnung der Aufgaben-Nachricht zu wenigstens einer Kategorie erfolgt. Gegebenenfalls kann wenigstens eine Kategorie in eine Unterkategorie aufgeteilt werden. Auch hierdurch erhöht sich die Übersichtlichkeit.

Eine vorteilhafte Ausgestaltung sieht vor, dass dann, wenn der Aufgaben-Sender eine bestimmte Kategorie auswählt, nur ein Aufgaben-Empfänger aus der im mobilen Endgerät hinterlegten Liste ausgewählt werden kann, den die entsprechende Kategorie zugewiesen ist. Auch hierdurch wird die Bedienung vereinfacht.

Ein Beispiel hierfür ist, dass dann, wenn der Aufgaben-Sender die Kategorie "Geschäft" auswählt, nur ein Aufgaben-Empfänger aus der Liste ausgewählt werden kann, dem die Kategorie "Geschäft" zugewiesen ist. Ein weiteres Beispiel ist, dass dann, wenn der Aufgaben-Sender die Kategorie "Familie" auswählt, nur ein Aufgaben-Empfänger aus der Liste ausgewählt werden kann, dem die Kategorie "Familie" zugewiesen ist. Ein weiteres Beispiel ist, dass dann, wenn der Aufgaben-Sender die Kategorie "Freizeit" auswählt, nur ein Aufgaben-Empfänger aus der Liste ausgewählt werden kann, dem die Kategorie "Freizeit" zugewiesen ist. Ein weiteres Beispiel ist, dass dann, wenn der Aufgaben-Sender die Kategorie "Ausbildung" auswählt, nur ein Aufgaben-Empfänger aus der Liste ausgewählt werden kann, dem die Kategorie "Ausbildung" zugewiesen ist.

Als Instant-Messenger-Programm können bekannte Programme wie beispielsweise "Viber", "What's up", "QIP for Windows Mobile", "Skype-Mobil" oder dergleichen herangezogen werden, die kostenlos angeboten werden.

Zur Sicherstellung der ordnungsgemäßen Funktion kann vorgesehen sein, dass die ordnungsgemäße Funktion des Instant-Messenger-Dienstes anhand einer Test-Aufgaben-Nachricht überprüft wird.

Eine Ausgestaltung sieht vor, dass auf dem Display des mobilen Endgeräts zusätzlich die Kategorie, sämtliche Aufgaben einer Kategorie, ein Kategorie-Symbol und eine Ziffer angezeigt werden, wobei die Ziffer die Anzahl der unerledigten Aufgaben angibt.

Eine andere Ausgestaltung sieht alternativ oder zusätzlich vor, dass eine Einteilung der Aufgaben bei der Anzeige auf dem Display des mobilen Endgeräts in aktive, unerledigte und inaktive erledigte Aufgaben unterteilt erfolgt, wobei die inaktiven erledigten Aufgaben grau gefärbt und am Ende der aktiven unerledigten Aufgaben angezeigt werden. Hierdurch wird jeweils die Bedienung vereinfacht.

Die erfindungsgemäße Vorrichtung zur Aufgaben-Verteilung sieht ein speziell hergerichtetes mobiles Endgerät für die Sendung der Aufgaben-Nachrichten, dem Empfang der Bestätigung-Nachrichten sowie für die Sendung die Erledigungs-Nachrichten zur Durchführung des Verfahrens vor. Besonders geeignet als mobiles Endgerät ist ein Smartphone, das inzwischen vergleichsweise preiswert erhältlich ist und die benötigte Hardware und Software zur Verfügung stellt.

In einem Speicher des mobilen Endgeräts ein erfindungsgemäßes Computerprogramm zur Durchführung des Verfahrens hinterlegt.

Nachfolgend wird auf die Ausgestaltung der erfindungsgemäßen Vorgehensweise näher eingegangen und es werden Ausführungsbeispiele beschrieben.

Optisch können dem Aufgaben-Sender zwei Seiten auf dem Display des mobilen Endgeräts angezeigt werden.

Die Form der Aufgabenliste, die vom Aufgaben-Sender erstellt ist, sieht wie eine Seite aus, die mit einer Graustufe oder Farbe markiert oder in einem bestimmten Originalstil gehalten ist. Auf der Seite ist eine Tabelle mit Spalten enthalten, die den Namen des Aufgaben-Empfängers und - alternativ - die zu diesem gehörende Kategorie (Haus, Arbeit, Studium, Freunde) einschließt. Dabei sind der Kategorie ein Symbol-Bild und eine Ziffer zugeordnet, die auf die Anzahl der aktiven Aufgaben verweist (Tabelle 1).

Die Kategorien, zu der der eine oder andere Aufgaben-Empfänger gehört, sind in der Tabelle mit folgenden Symbol-Bildern gekennzeichnet:
Kategorie "Haus" mit dem Symbol-Bild "Haus", die Kategorie "Arbeit" mit dem Symbol-Bild "Euro", die Kategorie "Ausbildung" mit dem Symbol-Bild "Buch" und die Kategorie "Freunde" mit dem Symbol-Bild "Smiley".

Außerdem sind die Namen der Aufgaben-Empfänger in die Aufgabenliste unter den Namen eingetragen, wie sie in der im mobilen Endgerät hinterlegten Liste enthalten sind.

**Tabelle 1**

| Aufgaben- Empfänger | Kategorie | | Anzahl der aktiven Aufgaben |
|---|---|---|---|
| Antipov Ivan | Arbeit (Zeichen «€») | 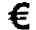 | 4 |
| Bruder | Haus (Zeichen «Haus») | 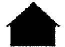 | 1 |
| Vladimir Trainer | Studium (Zeichen «Buch») | 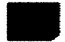 | 2 |
| Grigorij | Freunde (Smiley) | 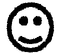 | 1 |

Bei einem Klick auf den interessierenden Aufgaben-Empfänger werden die durchnummerierten Aufgaben mit den Erledigungsfristen geöffnet. Diese Liste enthält am Anfang die zu erledigenden Aufgaben und am Ende die schon erledigten Aufgaben in anderer Farbdarstellung oder Graustufen (graue Schriftfarbe) (Tabelle 2).

**Tabelle 2**

| **Antipov Ivan** | | |
|---|---|---|
| Aufgaben | | Erledigungsfrist |
| • | Ergebnisse der Konferenz zusammenfassen | 15.06.2014 10:00 |
| • | einen Einkaufsplan für das nächste Jahr ausarbeiten | 01.07.2014 13:00 |
| • | Einladungen den Hauptpersonen verschicken | 10.06.2014 |
| • | einen Bericht vorbereiten | 06.06.2014 09:00 |
| • | eine Drucksubskription ausfertigen | 15.03.2014 |

Gegebenenfalls kann die Aufgabe auch ohne Erledigungsfrist dargestellt werden. Man muss dabei bemerken, dass die Aufgaben sowohl in aktive als auch in inaktive Aufgaben unterteilt sein können. Die Aufgaben, deren Fristen bereits vergangen sind, werden beispielsweise in der Färbung grau wiedergegeben. Die inaktiven Aufgaben können vorzugsweise am Ende der Tabelle dargestellt werden. Auf Wunsch kann der Aufgaben-Sender diese Aufgaben auch löschen.

Die Form der Aufgabenliste, die dem Benutzer gestellt ist, sieht wie eine Seite aus, die mit einer anderen Farbe dargestellt ist und von der vorher beschriebenen Liste abweicht oder im Originalstil gehalten ist. Diese Seite weist eine Tabelle auf, die den Namen des Fragestellers enthält und die Kategorie, zu der der Name gehört. Die Kategorie ist wie bei der vorher beschriebenen Liste gekennzeichnet (Tabelle 3). Auch die Symbol-Bilder sind die gleichen.

**Tabelle 3**

| Name des Anfragestellers | Kategorie | | Zahl der aktiven Aufgaben |
|---|---|---|---|
| Anja Tochter | Haus (Zeichen «Haus») | 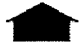 | 3 |
| Beresin Alexander | Arbeit (Zeichen «€») | 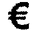 | 2 |
| Vasilij Institut | Freunde (Smiley) | 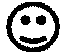 | 2 |
| Grigorij | Studium (Zeichen «Buch») | 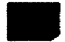 | 1 |

Bei einem Klick auf den interessierenden Aufgaben-Sender, der den Auftrag erstellt hat, werden die durchnummerierten Aufgaben mit den Erledigungsfristen geöffnet, die der Aufgaben-Empfänger zu erfüllen hat (aktive Aufgaben) und die er schon erledigt hat (inaktive Aufgaben) (Tabelle 4).

**Tabelle 4**

| **Anja Tochter** | |
|---|---|
| Aufgaben | Erledigungsfrist |
| • Zum Training bringen | 10.04.2014 15:00 |
| • Elternberatung | 14.04.2014 19:00 |
| • Ein Englischlehrbuch kaufen | 11.04.2014 |
| • eine Bescheinigung fürs Schwimmbad ausfertigen | 05.03.2014 |

Gegebenenfalls kann die Aufgabe auch ohne Erledigungsfrist gestellt werden. Die Unterteilung der Aufgaben in aktive und inaktive Aufgaben kann ebenfalls beibehalten werden sowie ihre Darstellung in anderen Farben.

Das erfindungsgemäße Verfahren arbeitet auf folgende Weise:
Ein Aufgaben-Sender wählt aus einer im mobilen Endgerät hinterlegten Liste genau einen bestimmten Aufgaben-Empfänger aus und sendet mit Hilfe der Option "Aufgabe hinzufügen" eine Mitteilung, die eine Aufgabe enthält (z. B. einen Termin bei einem Arzt ab 14.00 bis 15.00 Uhr am 1.06.2014). Der Nachrichten-Sender erstellt und füllt die Felder in der Liste auf. Die Aufgabenform (Aufgabe, Ereignis, Geburtstag, Jahrestag, Auftrag, Bitte), das Thema und das Datum und die Stunde werden ausgewählt.

Auf dem Display wird die vorliegende Aufgaben-Nachricht mit den angebotenen Varianten nachfolgender Handlungen angezeigt. Die bestimmte Aufgaben-Nachricht wird "empfangen" oder "abgelehnt". Im Falle der Zustimmung zur Aufgaben-Nachricht wird diese mit der Erfüllungsfrist in die Aufgabenliste übernommen und im Speicher des mobilen Endgeräts als Kalendereintrag gespeichert.

Auf Wunsch kann dieser Vorgang mit dem telefonischen Tagebuch synchronisiert werden.

Damit kann in dem mobilen Endgerät die Aufgaben-Nachricht in der Aufgabenliste im Kalender, d. h. dem Speicher des mobilen Endgeräts gespeichert werden.

In der Aufgabenliste gibt es eine Sortierungsfunktion. Für die Bequemlichkeit der Benutzung kann ein Nachrichten-Empfänger die erhaltenen Aufgaben nach der Rangordnung der Erledigungsfristen, der Namen und der Kategorien oder der Wichtigkeit der Erfüllung sortieren.

Sobald die Aufgabe erledigt ist, bestätigt der Aufgaben-Sender mit einem Klick in der Aufgabenliste, dass die von ihm gestellte Aufgabe erledigt ist und geschlossen werden kann. Dann erlischt beispielsweise ein farbiger Marker, der die Wichtigkeit der Aufgaben gekennzeichnet hat, und wird farblos. Die Aufgaben-Nachricht bewegt sich an das Ende der Aufgabenliste und steht damit ganz am Ende aller noch aktiven Aufgaben.

Im Falle der Nicht-Erledigung der Aufgabe kann der Aufgaben-Sender die Aufgaben-Nachricht entweder schließen oder die Frist verändern oder auch nichts unternehmen. Dann bleibt die Aufgaben-Nachricht in der Aufgabenliste "hängen".

Auf Wunsch kann der Aufgaben-Empfänger auf dem eigenen mobilen Endgerät die von ihm erledigte Aufgaben-Nachricht löschen. Die Erledigung der Aufgabe soll vom Aufgaben-Empfänger an den Aufgaben-Sender mittels einer Erledigungs-Nachricht gesandt werden und der Aufgaben-Sender sendet daraufhin eine Bestätigungs-Nachricht an den Aufgaben-Empfänger zurück, dass die Aufgabe somit erledigt ist.

Der Aufgaben-Sender kann sich selbst eine Aufgabe stellen oder eine Notiz für jeden beliebigen Aufgaben-Empfänger aus dem Telefonbuch, entsprechend der Liste, erstellen ohne eine spezielle Anfrage, die eine Bestätigungs-Nachricht vom Aufgaben-Empfänger erfordert. Die Form der Aufgaben-Nachricht kann nach ihrer Zielsetzung und ihres Sinnes aufgeteilt werden:
1. Aufgabe (z. B. einen Bericht vorbereiten)
2. Ereignis (z. B. Geburtstag, Jahrestag, Termin)
3. Auftrag oder Bitte (z. B. die Wohnung aufräumen, die Hausaufgabe erledigen).

Außerdem ist erfindungsgemäß gegebenenfalls die Bildung von Unterkategorien möglich, die eine weitere Vereinfachung der Bedienung ermöglichen.

Nehmen wir z. B. die Kategorie "Arbeit", in der auf Wunsch der Aufgaben-Sender seine Unterkategorie erstellen kann. Dabei können in der Unterkategorie "Partner" die Varianten der Aufgaben-Nachrichten sein: Zum Geburtstag gratulieren, die Schuld von 1000 € zurückzahlen, jemanden anrufen usw. Bei der Unterkategorie "Mitarbeiter" können die Aufgaben-Nachrichten lauten: Einen Bericht vorbereiten, ein Gespräch durchführen usw. Bei der Unterkategorie "Kinder" können die Aufträge die Varianten haben: Vom Training abholen, in den Frisiersalon bringen usw. Bei der Unterkategorie "Eltern" können die Aufgaben-Nachrichten lauten: ein Geschenk kaufen, die Möbel auswählen helfen usw.

Den Unterkategorien können eigene Symbol-Bilder zugeordnet sein.

Zusammenfassend muss noch bemerkt werden, dass das System für die Aufgaben-Verteilung das folgende Ergebnis bekommt:
Erstens wird den Benutzern der mobilen Endgeräte der Zugang auf die ganze Liste von Aufgaben, Ereignissen, Aufträgen, Terminplänen, Anrufen und Aktivitäten für den Tag eingeräumt, die der Benutzer sich selbst gestellt hat und die ihm andere Benutzer gestellt haben und dies dank der Datenspeicherung im Speicher als Kalender des mobilen Endgeräts. Außerdem erscheint bei den Benutzern eine Möglichkeit der Kontrolle und der Steuerung der Aufgaben, Ereignisse, die vom Benutzer erstellt worden sind, und jenen Aufgaben-Nachrichten, die einem Benutzer von einem Aufgaben-Sender gestellt wurden.

## Patentansprüche

1. Verfahren zur Aufgaben-Verteilung,
bei welchem wenigstens eine Aufgaben-Nachricht von einem Aufgaben-Sender über ein mobiles Endgerät zu einem Aufgaben-Empfänger übermittelt wird und bei welchem der Aufgaben-Sender den Aufgaben-Empfänger aus einer im mobilen Endgerät hinterlegten Liste auswählt,
wobei die Aufgaben Aktivitäten, Ereignisse, Arbeitszeiten, Termine, Erholung, Freizeit, Familie, Ausbildung und dergleichen betreffen,
**dadurch gekennzeichnet,**
**dass** genau ein Aufgaben-Empfänger aus der Liste ausgewählt wird, dass für den einen ausgewählten Nachrichten-Empfänger eine oder mehrere Aufgaben erstellt werden,
**dass** die Erstellung der Aufgabe nur als Text ohne Dateianhänge erfolgt, dass ein Instant-Messenger-Programm im mobilen Endgerät gestartet wird, dass die Aufgaben-Nachricht an den einen Nachrichten-Empfänger über eine Mobilfunk-Verbindung mittels des Instant-Messenger-Programms gesandt wird,
**dass** nur der Aufgaben-Sender von seinem mobilen Endgerät eine Aufgabe an den Aufgaben-Empfänger senden kann und dass der Aufgaben-Empfänger keine mit dieser Aufgaben-Nachricht in Verbindung stehende weitere Aufgabe an den Nachrichten-Sender zurücksenden kann, und
**dass** vom Aufgaben-Empfänger eine Annahme-Nachricht über die Annahme der Aufgabe und/oder eine Erledigungs-Nachricht der wenigstens einen gestellten Aufgabe vom Aufgaben-Empfänger über die Mobilfunk-Verbindung mittels des Instant-Messenger-Programms zurück an den Aufgaben-Sender gesendet wird.

2. Verfahren nach Anspruch 1,
**dadurch gekennzeichnet,**
**dass** der Aufgaben-Sender über die Mobilfunk-Verbindung mittels des Instant-Messenger-Programms an den Aufgaben-Empfänger eine Bestätigungs-Nachricht über die Schließung der Aufgaben-Nachricht sendet.

3. Verfahren nach Anspruch 1,
**dadurch gekennzeichnet,**
**dass** eine Speicherung der Aufgaben-Nachricht und des Aufgaben-Empfängers in eine Speichereinheit des mobilen Endgeräts erfolgt.

4. Verfahren nach Anspruch 1,
**dadurch gekennzeichnet,**
**dass** eine Anzeige eines Kalenders auf einem Display des mobilen Endgeräts erfolgt, welche die Aufgaben-Nachricht und den Aufgaben-Empfänger wiedergibt.

5. Verfahren nach einem der vorhergehenden Ansprüche,
**dadurch gekennzeichnet,**
**dass** eine Zuordnung der Aufgaben-Nachricht zu wenigstens einer Kategorie erfolgt.

6. Verfahren nach Anspruch 5,
**dadurch gekennzeichnet,**
**dass** eine Aufteilung wenigstens einer Kategorie in Unterkategorien erfolgt.

7. Verfahren nach Anspruch 5 oder 6,
**dadurch gekennzeichnet,**
**dass** den in der Liste des mobilen Endgeräts hinterlegten Aufgaben-Empfängern wenigstens eine Kategorie oder Unterkategorie zugeordnet wird.

8. Verfahren nach Anspruch 5,
**dadurch gekennzeichnet,**
**dass** dann, wenn der Aufgaben-Sender die Kategorie "Geschäft" auswählt, nur ein Aufgaben-Empfänger aus der Liste ausgewählt werden kann, dem die Kategorie "Geschäft" zugewiesen ist, dass dann, wenn der Aufgaben-Sender die Kategorie "Familie" auswählt, nur ein Aufgaben-Empfänger aus der Liste ausgewählt werden kann, dem die Kategorie "Familie" zugewiesen ist, dass dann, wenn der Aufgaben-Sender die Kategorie "Freizeit" auswählt, nur ein Aufgaben-Empfänger aus der Liste ausgewählt werden kann, dem die Kategorie "Freizeit" zugewiesen ist, und dass dann, wenn der Aufgaben-Sender die Kategorie "Ausbildung" auswählt, nur ein Aufgaben-Empfänger aus der Liste ausgewählt werden kann, den die Kategorie "Ausbildung" zugewiesen ist.

9. Verfahren nach Anspruch 1,
**dadurch gekennzeichnet,**
**dass** als Instant-Messenger-Programm "Viber", "What's up", "QIP for Windows Mobile", "Skype-Mobil" oder dergleichen verwendet wird.

10. Verfahren nach Anspruch 1 oder 9,
**dadurch gekennzeichnet,**
**dass** die ordnungsgemäße Funktion des Instant-Messenger-Dienstes anhand einer Test-Aufgaben-Nachricht überprüft wird.

11. Verfahren nach Anspruch 4 und 5 oder 4 und 6,
**dadurch gekennzeichnet,**
**dass** auf dem Display des mobilen Endgeräts zusätzlich die Kategorie, sämtliche Aufgaben einer Kategorie, ein Kategorie-Symbol und eine Ziffer angezeigt werden, wobei die Ziffer die Anzahl der unerledigten Aufgaben angibt.

12. Verfahren nach Anspruch 4 oder11,
**dadurch gekennzeichnet,**
**dass** eine Einteilung der Aufgaben bei der Anzeige auf dem Display des mobilen Endgeräts in aktive, unerledigte und inaktive erledigte Aufgaben unterteilt erfolgt, wobei die inaktiven erledigten Aufgaben grau gefärbt und am Ende der aktiven unerledigten Aufgaben angezeigt werden.

13. Vorrichtung zur Aufgaben-Verteilung,
**dadurch gekennzeichnet,**
**dass** ein speziell hergerichtetes mobiles Endgerät für die Sendung der Aufgaben-Nachrichten, dem Empfang der Bestätigung-Nachrichten sowie für die Sendung die Erledigungs-Nachrichten zur Durchführung des Verfahrens nach einem der vorhergehenden Ansprüche vorgesehen ist.

14. Vorrichtung nach Anspruch 1 bis13,
**dadurch gekennzeichnet,**
**dass** das mobile Endgerät ein Smartphone ist.

15. Computerprogramm, das in einem Speicher des mobilen Endgeräts zur Durchführung des Verfahrens nach einem der Ansprüche 1 -12 hinterlegt ist.
